# EUROPEAN PATENT APPLICATION

(11) **EP 4 610 622 A1**
(43) Date of publication of application: **03.09.2025**
(21) Application number: 24160790.2
(22) Date of filing: 01.03.2024
(51) Int. Cl.: G01N 1/30

(54) **METHOD FOR IMAGING BIOLOGICAL SAMPLES**

(71) Applicant: Leica Biosystems Nussloch GmbH, 69226 Nussloch (DE)
(72) Inventor: Ulbrich, Hermann, 76669 Bad Schönborn-Mingolsheim (DE)
(74) Representative: Schaumburg und Partner Patentanwälte mbB

(57) **Abstract**

A method for imaging biological samples comprising the following steps: a) providing a biological sample on a sample carrier; b) contacting the biological sample with an imaging reagent; c) imaging the biological sample, whilst the biological sample is in contact with the imaging reagent; and d) contacting the biological sample with a mounting reagent.

## Description

### Technical field

The invention relates to a method for imaging biological samples, in particular histopathological samples. After imaging the biological sample are contacted with a mounting reagent for archiving the biological sample.

### Background

The preparation, imaging, and archiving of biological samples often happen under significant time pressure. For example, in research or clinical settings, rapid turnaround times are essential to provide timely information to decision makers. In particular in histopathology, efficient processing according to strict protocols is necessary. Any delays in sample preparation can cascade down the workflow, impacting subsequent stages such as imaging and analysis, and ultimately delay decision making. For example, the requirement to prepare samples such that they are sufficiently conserved for long-term archiving regularly requires days and may delay subsequent imaging steps. At the same time, degradation of biological samples such as tissue sections during processing needs to be reduced or prevented to ensure the fidelity of cellular structures.

### Summary

It is an object to provide a method for imaging biological samples that enables rapidly processing and imaging of biological samples, in particular for biological samples that require archiving with high fidelity.

The aforementioned object is achieved by the subject-matter of the independent claim. Advantageous embodiments are defined in the dependent claims and the following description.

A method for imaging biological samples comprises the following steps: a) providing a biological sample on a sample carrier; b) contacting the biological sample with an imaging reagent; c) imaging the biological sample, whilst the biological sample is in contact with the imaging reagent; and d) contacting the biological sample with a mounting reagent.

The method enables efficiently imaging and preferably archiving of the biological samples. This is of particular importance for pathological, in particular histopathological, analyses of biological samples. In these cases, it is particularly desirable to reduce the time from providing the biological sample to imaging the biological sample. The biological sample can then be analysed based on a generated image of the biological sample. At the same time, in the context of pathological analyses it is generally a requirement to archive biological samples, for example for ten years. This step of archiving generally includes contacting the biological sample with a mounting reagent that conserves the biological sample. Contacting the biological sample with the mounting reagent takes considerable time, for example it may take two days for the mounting reagent to set. In this time no other processing of the biological sample is possible.

A further requirement in the context of processing biological samples for pathological analyses is a consistent quality and reproducibility. Thus, prolonged analyses times or steps prior to contacting with the mounting reagent are generally not possible to avoid compromising the biological sample, for example due to drying out. The drying out may distort the biological sample or generate undesirable artifacts in a generated image of the biological sample.

However, the present method does enable imaging without compromising the biological sample prior to contacting with the mounting reagent by imaging the biological sample in an imaging reagent. This avoids drying of the biological sample. Only after imaging is the biological sample contacted with a mounting reagent in order to preserve the biological sample for long-term archival storage.

The biological sample may be a tissue section generated from a tissue sample such as a biopsy, for example. There may be several biological samples, for example from a single or several biopsies. Each biological sample may be on a dedicated sample carrier.

During the step of providing the biological sample, the biological sample may be generated as a tissue section by means of a microtome, for example. The generated biological sample is then placed on the sample carrier and preferably remains on that sample carrier throughout the method. The sample carrier may be a (glass) microscope slide, for example. In an alternative, the sample carrier may be a foil. The sample carrier is preferably transparent in order to enable imaging of the biological sample.

The imaging of the biological sample may be carried out by means of an imaging device comprising an optical system such as a microscope, for example. During the step of imaging the biological sample several individual images of the biological sample may be generated, for example of areas of the biological sample that are adjacent to each other. The individual images may be stitched together to generate a single image. This may also be referred to as scanning of the biological sample.

Prior to imaging the biological sample, the biological sample is contacted with an imaging reagent. In particular, the imaging reagent is a liquid. Preferably, the imaging reagent has a refractive index that is similar to at least one of water, the material of the sample carrier, and the material of a front lens of an optical system of the imaging device. Further, the imaging reagent is preferably arranged in the space between the biological sample and at least the front lens of the optical system during step c). Preferably, the biological sample remains in contact with the imaging reagent during steps b) and c).

The mounting reagent is suitable for conservation and long-term archival storage of the biological sample, in particular. Specifically, for storage of ten years. Thus, the biological sample is sealed within the mounting reagent. For example, the mounting reagent may be xylene based.

The steps a) to d) are preferably carried out in their alphabetical order.

In particular, between each of the steps of the method, the sample carrier with the biological sample may be transferred between devices configured to carry out the respective step. Preferably, the biological sample is in contact with or submerged in a reagent, in particular a liquid reagent, when transferred between these devices.

Preferably, step a) comprises staining the biological sample by contacting the biological sample with at least one staining reagent. This enables a detailed analysis of the biological sample, in particular of stained structures of the biological sample. The biological sample may therefore be a stained biological sample. The at least one staining reagent may be a liquid, in particular an aqueous solution. The biological sample may be contacted with the at least one staining reagent by means of a staining device. Preferably, the biological sample is in contact with or submerged in the at least one staining reagent in step a) after initially providing the biological sample on the sample carrier.

For example, in step a) the biological sample may initially be generated as a tissue section from a biopsy and placed on the sample carrier. Subsequently, the biological sample on the sample carrier may be contacted with the staining reagent in order to stain specific (biological) features of the biological sample. The stained biological sample may then be contacted with the imaging reagent and imaged.

Preferably, the imaging reagent is miscible in the staining reagent. This enables and easy and quick progression from the step a) directly to the step b), whilst generating high quality images of the biological samples. In particular, fluids or liquids are miscible when they form a homogeneous mixture or solution.

Preferably, the mounting reagent is miscible in the imaging reagent. Preferably, the imaging reagent is miscible in the staining reagent. This enables and easy and quick progression from the step c) directly to the step d).

Preferably, the method further comprises a step of covering the biological sample on the sample carrier. This enables safe storage of the biological sample. In particular, this may be carried out in step d), preferably after the biological sample is contacted with the mounting reagent. For example, a transparent cover element, such as a cover glass, may be arranged on the biological sample. In this case, the biological sample is arranged between the sample carrier and the transparent cover element. This is particularly relevant for long-term storage or archiving of the biological sample.

The step of covering the biological sample and/or contacting the biological sample with the mounting reagent may be carried out by means of covering device.

Preferably, the method further comprises a step of contacting the biological sample with at least one dehydration reagent. The dehydration reagent enables efficiently dehydrating the biological sample. For example, the staining reagent may be an aqueous solution. In this case, the water may be required to be removed prior to storage of the biological sample. Preferably, the water is removed prior to the imaging step. In particular, this step may be carried out after step a) and prior to step b). Thus, the dehydration reagent is preferably miscible in the last staining reagent the biological sample was contacted with.

The dehydration reagent may be a water-miscible solvent, in particular a water-miscible organic solvent, preferably ethanol. The dehydration reagent may be contacted with the biological sample in a series of dilutions with increasing concentrations of the dehydration reagent. For example, ethanol may be contacted with the biological sample in a series of steps at 75%, 95% and 100% concentration.

Preferably, the imaging reagent is miscible in the at least one dehydration reagent. This enables and easy and quick progression from the step of contacting the biological sample with the dehydration reagent directly to the step b). In case of a series of dilutions of the dehydration reagent, the imaging reagent is preferably miscible with at least the last dilution of the dehydration reagent contacted with the biological sample. In a particular embodiment, the imaging reagent is the dehydration reagent, in particular, the undiluted dehydration reagent.

Preferably, during the step c) the biological sample is submerged in the imaging reagent. This enables generating high quality images of the biological sample. In particular, the biological sample is prevented from drying out when submerged in the imaging reagent. Preferably, the biological sample is submerged in the imaging reagent in steps b) and c). The biological sample may be submerged in the imaging reagent together with the sample carrier.

Preferably, during step c) at least a front lens and a focus plane of an optical system configured to image the biological sample are arranged in the imaging reagent and the biological sample is arranged at least partially in the focus plane. This enables generating high quality images of the biological sample. In particular, the space between the biological sample and the front lens may be filled with the imaging reagent. Since the imaging reagent, as a liquid, generally has a refractive index closer to the material of the front lens than air, this may reduce aberrations when imaging the biological sample.

Preferably, the imaging reagent is a water-miscible solvent, in particular a water-miscible organic solvent, preferably ethanol. This enables an easy and quick progression from the step a), in particular from the step of contacting the biological sample with the staining reagent, directly to the step b).

Preferably, prior to step d), in particular, prior to contacting with the mounting reagent, the biological sample is contacted with a washing reagent. This enables removing the imaging reagent prior to contacting the biological sample with the mounting reagent. In particular, this is relevant when the mounting reagent is not miscible with the imaging reagent.

Preferably, the washing reagent is miscible in the imaging reagent. This enables efficient removal of the imaging reagent prior to contacting the biological sample with the mounting reagent. In particular, the washing reagent is additionally miscible with the mounting reagent.

Preferably, the washing reagent is an aromatic hydrocarbon. This enables using a hydrocarbon based mounting reagent. For example, the washing reagent may comprise xylene. Similarly, the mounting reagent may comprise xylene.

Preferably, the imaging reagent is an aromatic hydrocarbon. This enables easy and quick progression from the step c) directly to the step d), in particular when the mounting reagent is hydrocarbon based. Preferably, the imaging reagent may comprise xylene.

### Short Description of the Figures

Hereinafter, specific embodiments are described referring to the drawings, wherein:
- Figure 1: is a flow chart of a method for imaging biological samples, and
- Figure 2: is a flow chart of a method for imaging biological samples according to a further embodiment.

### Detailed Description

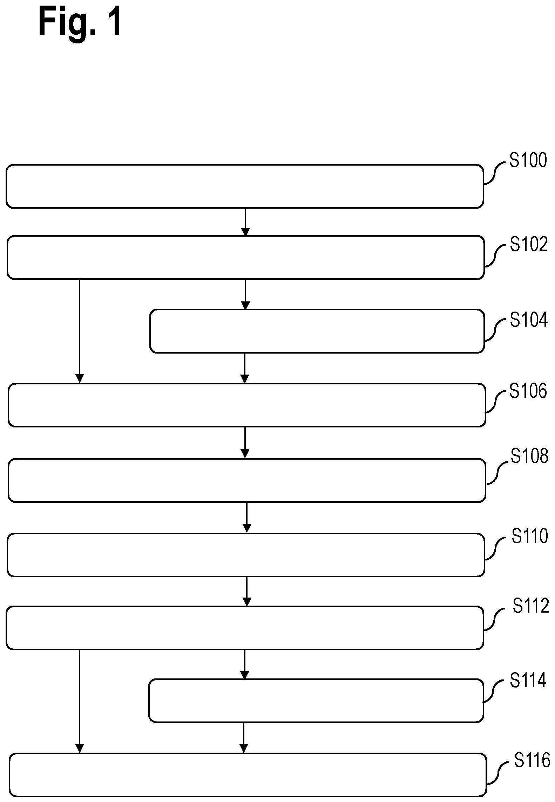

Figure 1 is a flow chart of a method for imaging biological samples. The method starts in step S100. In step S102 a biological sample is provided on a sample carrier. This step may include generating the biological sample, for example, from a biopsy. The biological sample may be a tissue section cut from the biopsy by means of a microtome.

The step S102 may optionally further comprise contacting the biological sample with at least one staining reagent in order to stain the biological sample. The staining reagent may specifically stain at least one biological structure of the biological sample. An example is the haematoxylin-eosin stain, during which the biological sample is contacted with an aqueous haematoxylin solution and an aqueous Eosin Y solution. This specifically stains cell nuclei blue and cytoplasm and extracellular matrix pink. For contacting the biological sample with the staining reagent, the biological sample may be submerged in the staining reagent, together with the sample carrier the biological sample is arranged on.

In an optional subsequent step S104 the biological sample may be contacted with a dehydration reagent. This may be required to remove water from the biological sample, for example as a step to conserve the biological sample. The dehydration reagent may in particular be required if the biological sample was contacted with an aqueous staining reagent in step S102. The dehydration reagent is a water-miscible solvent, in particular a water-miscible organic solvent, preferably ethanol. The dehydration reagent may be contacted with the biological sample in several subsequent dilutions with increasing concentrations of the dehydration reagent. For example, ethanol may be the dehydration reagent and initially applied to at a concentration of 75%, then a concentration of 95% may be applied, and a final concentration may be applied at essentially 100%. The step S104 may be skipped, in particular, if the biological sample is not stained in step S102.

In step S106 the biological sample is contacted with an imaging reagent. The imaging reagent is preferably a water-miscible solvent, in particular a water-miscible organic solvent. In case a staining reagent was used in step S104, the imaging reagent is preferably miscible in the staining reagent. In a particularly preferred embodiment, the imaging reagent is the dehydration reagent. The imaging reagent may be ethanol, in particular at a concentration of essentially 100%. Thus, the imaging reagent may be the last dilution applied during the staining in step S104. Alternatively, the imaging reagent may be separate solution to any reagent previously in contact with the biological sample.

When contacting the biological sample with the imaging reagent, the imaging reagent may replace the dehydration reagent. For example, by transferring the sample carrier from a container with the dehydration reagent to a container with the imaging reagent, the first reagent is replaced by the latter. This ensures that the biological sample is in continuous contact with at least one of the reagents and cannot dry out.

In a next step S108 the biological sample is imaged whilst it is in contact with the imaging reagent. In particular, the biological sample continues to be submerged throughout the steps S106 and S108. This avoids the biological sample drying during the imaging of the biological sample.

The biological sample may be imaged by means of an imaging device such as a microscope. To that end, the imaging device may comprise a liquid container filled with the imaging reagent and in which at least a focus plane of an optical system is arranged. A corresponding imaging plane of the optical system may be arranged on a detector surface in order to image the biological sample arranged in the focus plane. Preferably, at least the space between the front lens and the biological sample is filled with the imaging reagent.

The imaging reagent preferably has a refractive index that is similar to the refractive index of at least a front lens of the optical system. This enables reducing aberrations when imaging the biological sample.

Ethanol is a particularly preferred imaging reagent since it evaporates quickly once removed and leaves no residue on the imaging device, in particular, the optical system.

In a step S110 the biological sample is contacted with a washing reagent. The washing reagent is preferably miscible in the imaging reagent. In particular, the washing reagent is an aromatic hydrocarbon. For example, the washing reagent comprises xylene.

When contacting the biological sample with the washing reagent, the washing reagent may replace the imaging reagent. For example, by transferring the sample carrier from a container with the imaging reagent to a container with the washing reagent, the first reagent is replaced by the latter. This ensures that the biological sample is in continuous contact with at least one of the reagents and cannot dry out.

In a subsequent step S112 the biological sample is contacted with a mounting reagent. The mounting reagent ensures that the biological sample is conserved for long-term storage. For example, the mounting reagent may cure or set into a hardened medium for permanent storage of the biological sample.

Preferably, the mounting reagent is miscible in the washing reagent. The mounting reagent may be hydrocarbon based. For example, the mounting reagent may comprise xylene.

When contacting the biological sample with the mounting reagent, the mounting reagent may replace the washing reagent. For example, by transferring the sample carrier from a container with the washing reagent to a container with the mounting reagent, the first reagent is replaced by the latter. This ensures that the biological sample is in continuous contact with at least one of the reagents and cannot dry out.

In an optional step S114 the biological sample is covered on the sample carrier with a cover element. The cover element may be a cover glass, for example. The cover element is placed on the biological sample with the mounting reagent still in contact with the biological sample. This ensures that the biological sample is surrounded with the mounting reagent between the cover element and the sample carrier.

In addition, the step S114 may include waiting for a specified time in order for the mounting reagent to cure or set. The curing or setting of the mounting reagent often requires two days.

The method ends in step S116.

In between the steps S102 to S114, the biological sample is preferably always in contact with a reagent, in particular, with the liquid reagent of the respective previous step. This avoids drying of the biological sample.

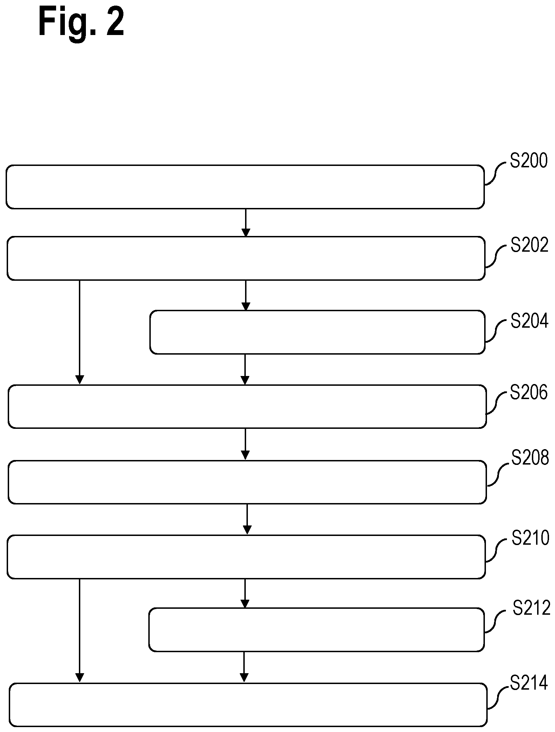

Figure 2 is a flow chart of a method for imaging biological samples according to a further embodiment. The method starts in step S200.

In step S202 a biological sample is provided on a sample carrier. This step may include generating the biological sample, for example, from a biopsy. The biological sample may be a tissue section cut from the biopsy by means of a microtome.

The step S202 may optionally further comprise contacting the biological sample with at least one staining reagent in order to stain the biological sample. The staining reagent may specifically stain at least one biological structure of the biological sample. An example is the haematoxylin-eosin stain, during which the biological sample is contacted with an aqueous haematoxylin solution and an aqueous Eosin Y solution. This specifically stains cell nuclei blue and cytoplasm and extracellular matrix pink. For contacting the biological sample with the staining reagent, the biological sample may be submerged in the staining reagent, together with the sample carrier the biological sample is arranged on.

In a subsequent step S204 the biological sample may be contacted with a dehydration reagent. This may be required to remove water from the biological sample, for example as a step to conserve the biological sample. The dehydration reagent may in particular be required if the biological sample was contacted with an aqueous staining reagent in step S202. The dehydration reagent is a water-miscible solvent, in particular a water-miscible organic solvent, preferably ethanol. The dehydration reagent may be contacted with the biological sample in several subsequent dilutions with increasing concentrations of the dehydration reagent. For example, ethanol may be the dehydration reagent and initially applied to at a concentration of 75%, then a concentration of 95% may be applied, and a final concentration may be applied at essentially 100%.

In step S206 the biological sample is contacted with an imaging reagent. In contrast to the method according to Fig. 1, the imaging reagent used in step S206 is preferably an aromatic hydrocarbon. The imaging reagent further is preferably miscible in the dehydration reagent. In particular, the imaging reagent may be xylene based.

When contacting the biological sample with the imaging reagent, the imaging reagent may replace the dehydration reagent. For example, by transferring the sample carrier from a container with the dehydration reagent to a container with the imaging reagent, the first reagent is replaced by the latter. This ensures that the biological sample is in continuous contact with at least one of the reagents and cannot dry out.

In a next step S208 the biological sample is imaged whilst it is in contact with the imaging reagent. In particular, the biological sample continues to be submerged throughout the steps S206 and S208. This avoids the biological sample drying during the imaging of the biological sample.

The biological sample may be imaged by means of an imaging device such as a microscope. To that end, the imaging device may comprise a liquid container filled with the imaging reagent and in which at least a focus plane of an optical system is arranged. A corresponding imaging plane of the optical system may be arranged on a detector surface in order to image the biological sample arranged in the focus plane. Preferably, at least the space between the front lens and the biological sample is filled with the imaging reagent.

The imaging reagent preferably has a refractive index that is similar to the refractive index of at least a material of a front lens of the optical system. This enables reducing aberrations when imaging the biological sample.

In a subsequent step S210 the biological sample is contacted with a mounting reagent. The mounting reagent ensures that the biological sample is conserved for long-term storage. For example, the mounting reagent may cure or set into a hardened medium for permanent storage of the biological sample.

Preferably, the mounting reagent is miscible in the imaging reagent. The mounting reagent may be hydrocarbon based. For example, the mounting reagent may comprise xylene.

When contacting the biological sample with the mounting reagent, the mounting reagent may replace the imaging reagent. For example, by transferring the sample carrier from a container with the imaging reagent to a container with the mounting reagent, the first reagent is replaced by the latter. This ensures that the biological sample is in continuous contact with at least one of the reagents and cannot dry out.

In an optional step S212 the biological sample is covered on the sample carrier with a cover element. The cover element may be a cover glass, for example. The cover element is placed on the biological sample with the mounting reagent still in contact with the biological sample. This ensures that the biological sample is surrounded with the mounting reagent between the cover element and the sample carrier.

In addition, the step S212 may include waiting for a specified time in order for the mounting reagent to cure or set. The curing or setting of the mounting reagent often requires two days.

The method ends in step S214.

In between the steps S202 to S212, the biological sample is preferably always in contact with a reagent, in particular, with the liquid reagent of the respective previous step. This avoids drying of the biological sample.

## Claims

1. A method for imaging biological samples comprising the following steps:
a) providing a biological sample on a sample carrier,
b) contacting the biological sample with an imaging reagent,
c) imaging the biological sample, whilst the biological sample is in contact with the imaging reagent, and
d) contacting the biological sample with a mounting reagent.

2. The method according to claim 1, wherein step a) comprises staining the biological sample by contacting the biological sample with at least one staining reagent.

3. The method according to claim 2, wherein the imaging reagent is miscible in the staining reagent.

4. The method according to one of the preceding claims, wherein the mounting reagent is miscible in the imaging reagent.

5. The method according to one of the preceding claims, further comprising a step of covering the biological sample on the sample carrier.

6. The method according to one of the preceding claims, further comprising a step of contacting the biological sample with at least one dehydration reagent.

7. The method according to claim 6, wherein the imaging reagent is miscible in the at least one dehydration reagent.

8. The method according to one of the preceding claims, wherein during the step c) the biological sample is submerged in the imaging reagent.

9. The method according to one of the preceding claims, wherein during step c) at least a front lens and a focus plane of an optical system configured to image the biological sample are arranged in the imaging reagent and the biological sample is arranged at least partially in the focus plane.

10. The method according to one of the preceding claims, wherein the imaging reagent is a water-miscible solvent.

11. The method according to claim 10, wherein prior to step d) [in particular, prior to contacting with the mounting reagent] the biological sample is contacted with a washing reagent.

12. The method according to claim 11, wherein the washing reagent is miscible in the imaging reagent.

13. The method according one of the preceding claims 11 to 12, wherein the washing reagent is an aromatic hydrocarbon.

14. The method according to one of the preceding claims 1 to 9, wherein the imaging reagent is an aromatic hydrocarbon.
